# EUROPEAN PATENT SPECIFICATION

(11) **EP 0 683 545 B1**
(45) Date of publication and mention of the grant of the patent: **08.03.2000**
(21) Application number: 95303253.9
(22) Date of filing: 16.05.1995
(51) Int. Cl.: H01R 4/64, H01R 4/60, F16L 25/00

(54) **Glands for terminating cables and pipes**
Kabelverschraubungen zum Anschliessen von Kabeln und Rohren
Presse-étoupes pour terminaisons de câbles et de tuyaux

(30) Priority: 21.05.1994 GB 9410200
(43) Date of publication of application: 22.11.1995
(73) Proprietor: HAWKE CABLE GLANDS LIMITED, Walsall, West Midlands WS9 8DS (GB)
(72) Inventor: Hand, Edward, Stalybridge, Cheshire, SK15 2QU (GB)
(74) Representative: Wightman, David Alexander

(56) References cited:
- DE-B- 1 615 624
- FR-A- 1 312 525
- FR-A- 2 672 105
- US-A- 4 655 486
- US-A- 5 066 248
- US-A- 5 308 122

## Description

This invention relates to glands for terminating cables and pipes.

The invention has particular application to terminations where good earth continuity is required between electrically conductive parts of the gland and the cable or pipe.

Typically the cable or pipe has an electrically conductive sleeve covered by an outer sheath of electrically insulating material that is received in an electrically conductive body of the gland. Currently, it is the practice to remove the outer insulation to expose the sleeve and to provide an earthing ring in the gland body for making electrical contact between the exposed sleeve and the gland body.

DE-B-1615624 (& GB 1128428) discloses a connector for coaxial cable having a continuity member with resilient contact fingers extending from one end of a tubular body. To assemble the connector, the outer insulation of the cable is removed to expose the outer conductor, and the tubular body inserted under the outer conductor with the contact fingers extending back over the outer conductor. A cylindrical ferrule is then fitted over the contact fingers to force the contact fingers inwards to penetrate the outer conductor and the ferrule crimped to secure the assembly and sandwich the outer conductor between the tubular body and the contact fingers of the continuity member.

FR-B-1312525 discloses a connector for coaxial cable having a continuity member with resilient contact fingers extending from the inner periphery of an annular collar. To assemble the connector, the contact fingers are manually tightened to pierce the outer insulation of the cable and contact the outer conductor. A conical socket is then slid over the contact arms up to the collar and is secured by screwing a sleeve nut on a threaded socket.

It is an object of the present invention to provide a gland for terminating cables and pipes having an outer sheath of electrically insulating material which provides earth continuity between electrically conductive parts of the gland and the cable or pipe without removing the outer sheath.

According to the present invention there is provided a gland for terminating cables or pipes having an electrically conductive sleeve covered by an outer sheath of electrically insulating material comprising an electrically conductive gland body having an axial opening at one end for receiving the cable or pipe, and an electrically conductive earthing ring for reception in the opening to provide an earth connection between the gland body and the conductive sleeve of the cable or pipe, the earthing ring having at least one contact finger with an inwardly directed projection deflectable inwardly to pierce the outer sheath and contact the sleeve to establish the earth connection characterised in that, in use the earthing ring is a push fit in the opening with the cable or pipe, and the at least one contact finger is deflected inwardly by engagement with a tapered entry portion of the opening causing the projection to pierce the outer sheath and contact the conductive sleeve of the cable or pipe.

The main advantage of the invention is that earth continuity between electrically conductive parts of the gland and cable or pipe is established automatically without removing the outer sheath by push fit of the earthing ring in the opening with the cable or pipe during assembly.

The earthing ring preferably has a plurality of circumferentially spaced contact fingers and may comprise a flat washer with the or each contact finger extending from the periphery of the washer.

Advantageously, the or each contact finger is arranged to extend axially and radially outwards of the washer in an undeformed free state of the earthing ring prior to being inserted in the opening.

The gland body preferably has an internal shoulder for axially locating the earthing ring in the opening. The shoulder may be provided by a counterbore in the gland body with the earthing ring arranged to bear against the shoulder with the or each contact finger being a close fit with the cable or pipe in the counterbore in the assembled gland.

Advantageously, means is provided for sealing engagement with the outer sheath of the cable or pipe. The sealing means may comprise an annular seal of resilient material preferably positioned between the gland body and a seal nut so as to be compressed inwardly to engage the outer sheath by threaded engagement of the seal nut with the gland body.

The seal may be arranged to bear against the end of the gland body or the tapered entry portion of the opening, and means is preferably provided to control compression of the seal on tightening the seal nut.

According to another aspect of the present invention, a method of terminating a cable or pipe comprises axially locating an earthing ring having at least one contact finger on the cable or pipe with said at least one contact finger extending axially and radially outwardly of the cable or pipe, presenting a gland body to the cable or pipe with the earthing ring located thereon, inserting the cable or pipe together with the earthing ring into an opening in the gland body so that the at least one contact finger engages a tapered entry portion of the opening and is deflected inwardly causing an inwardly directed projection of the at least one contact finger to pierce an outer insulation sheath of the cable or pipe and contact an inner conductive sleeve of the cable or pipe to establish electrical continuity between the inner sleeve and the gland body.

Other features, benefits and advantages of the invention will be apparent from the following description described of exemplary embodiments with reference to the accompanying drawings, wherein:-
FIGURE 1 is a longitudinal sectional view of an assembled termination employing a gland according to a first embodiment of the present invention;
FIGURE 2 is an exploded longitudinal sectional view of the termination of Figure 1 prior to assembly;
FIGURE 3 is an exploded isometric view of the component parts of the gland shown in Figures 1 and 2; and
FIGURE 4 is a longitudinal sectional view of an assembled termination employing a gland according to a second embodiment of the present invention.

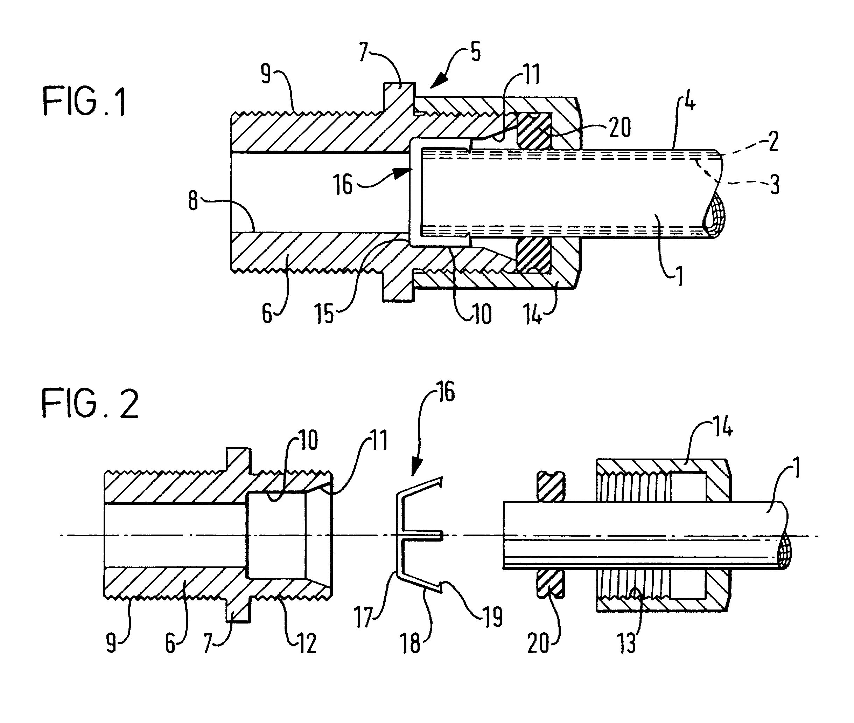

With reference to Figures 1 to 3 of the accompanying drawings, a composite pipe 1 for one or more conductors (not shown) such as electric cable or fibre optic cable comprises an electrically conductive sleeve 2 sandwiched between inner and outer electrically insulating sheaths 3 and 4 respectively.

In this exemplary embodiment the sleeve 2 is an aluminium tube and the sheaths 3,4 are made of non-conducting plastics having appropriate properties for the intended application.

An earth continuity termination for the pipe 1 is provided by a gland 5 having an electrically conductive entry body 6 formed with an external hexagonal flange 7 for engagement by a spanner or like tool to rotate the entry body 6.

One end of the body 6 has a cylindrical bore 8 and an external thread 9 for securing the entry body 6 to an enclosure such as a junction box or other electrical equipment (not shown) to which the conductor(s) extending through the pipe 1 are connected in known manner.

The other end of the body 6 has a coaxial counterbore 10 with a tapered portion 11 of frusto-conical shape at the outer end and an external thread 12 for threaded engagement with a complementary internal thread 13 of a seal nut 14.

The counterbore 10 terminates at the inner end in an internal shoulder 15 providing a seating for an electrically conductive earthing ring 16.

The ring 16 comprises a flat annular washer 17 sized to fit within the counterbore 10 and provided with a plurality of circumferentially spaced deflectable cantilever contact fingers 18. The contact fingers 18 extend axially and radially outwards from the periphery of the washer 17 in the undeformed free state of the ring 16 and terminate in radially inwardly directed spikes 19.

On assembly, the seal nut 14 and a resilient annular seal 20 of U-shape in axial section are slipped over the end of the pipe 1. The earthing ring 16 is then positioned with the washer 17 seated against the end of the pipe 1 to axially locate the earthing ring 16 and the contact fingers 18 surrounding and spaced from the outer sheath 4. The end of the pipe 1 and earthing ring 16 are then pushed into the counterbore 10 of the entry body 6 until the washer 17 locates against the shoulder 15.

As the pipe 1 and ring 16 are pushed into the counterbore 10, the contact fingers 18 are compressed radially inwards by engagement with frusto-conical entry portion 11 causing the spikes 19 to pierce the outer sheath 4 and contact the sleeve 2. The pipe 1 and deformed fingers 18 are a close fit in the counterbore 10 when pushed fully home thereby ensuring good earth continuity between the sleeve 2 and entry body 6 through the ring 16.

Finally, the termination is completed by bringing the seal nut 14 into threaded engagement with the entry body 6. As the seal nut 14 is tightened on the entry body 6, the seal 20 is compressed onto the outer sheath 4 of the pipe 1 to provide a fluid-tight seal and strong grip to prevent the pipe 1 being pulled out of the entry body 6. A constant compression of the seal 20 is obtained by tightening the seal nut 14 against the flange 7 of the entry body 6.

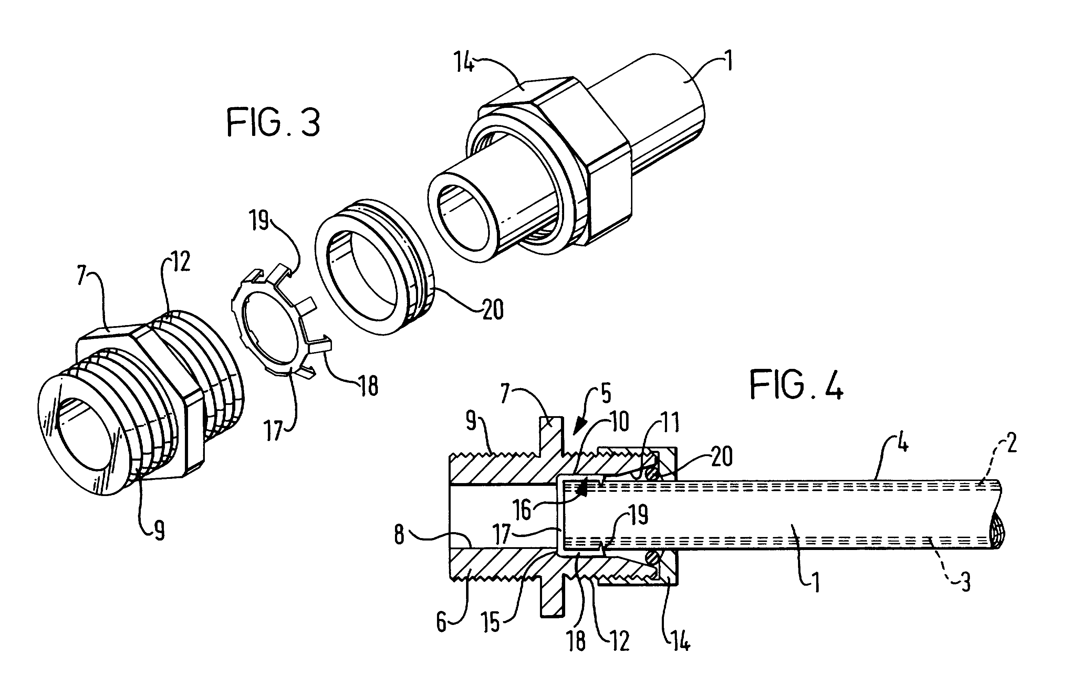

Figure 4 shows a second embodiment in which like reference numerals are used to indicate parts corresponding to the first embodiment above-described. In this embodiment, an O-ring 20 is compressed by engagement with the frusto-conical entry portion 11 on tightening the seal nut 14 to provide a fluid-tight seal and strong grip to prevent the pipe 1 being pulled out of the entry body 6.

As will be appreciated from the foregoing description, the earthing ring 16 ensures that good earth continuity is obtained between the sleeve 2 and entry body 6 on assembly without removing the outer insulation sheath 4 of the pipe 1. Furthermore, by arranging the earthing ring to be a push fit on inserting the cable or pipe 1 with contact fingers 18 that are deflected to pierce the outer insulation sheath 4 of the cable or pipe 1, the required earth continuity is achieved independently of and does not rely on threaded engagement of the seal nut 14 with the entry body 6.

It will be understood that the invention is not limited to terminations for pipes and may be applied to terminations for electric cables in which an outer insulation sheath covers an electrically conductive sleeve such as wire armour or braid.

It will also be appreciated by those familiar in this field that the invention has application to different types of glands for terminating cables and pipes and is not limited to the exemplary gland above-described.

## Claims

1. A gland (5) for terminating cables or pipes (1) having an electrically conductive sleeve (2) covered by an outer sheath (4) of electrically insulating material comprises an electrically conductive gland body (6) having an axial opening (10) at one end for receiving the cable or pipe (1), and an electrically conductive earthing ring (16) for reception in the opening (10) to provide an earth connection between the gland body (6) and the cable or pipe (1), the earthing ring (16) having at least one contact finger (18) with an inwardly directed projection (19) deflectable inwardly to pierce the outer sheath (4) and contact the sleeve (2) to establish the earth connection characterised in that, in use, the earthing ring (16) is a push fit in the opening (10) with the cable or pipe (1), and the at least one contact finger (18) is deflected inwardly by engagement with a tapered entry portion (11) of the opening (10) causing the projection (19) to pierce the outer sheath (4) and contact the conductive sleeve (2) of the cable or pipe (1).

2. A gland according to Claim 1 characterised in that the earthing ring (16) has a plurality of circumferentially spaced contact fingers (18).

3. A gland according to Claim 1 or Claim 2 characterised in that the earthing ring (16) comprises a flat washer (17) with the or each contact finger (18) extending from the periphery of the washer (17).

4. A gland according to Claim 3 characterised in that the or each contact finger (18) is arranged to extend axially and radially outwards of the washer (17) in an undeformed free state of the earthing ring (16) prior to being inserted in the opening (10).

5. A gland according to any one of the preceding Claims characterised in that the gland body (6) has an internal shoulder (15) for axially locating the earthing ring (16) in the opening (10).

6. A gland according to Claim 5 characterised in that the shoulder (15) is provided by a counterbore (10) in the gland body (6), and the earthing ring (16) bears against the shoulder (15) with the or each contact finger (18) being a close fit with the cable or pipe (1) in the counterbore (10) in the assembled gland (5).

7. A gland according to any one of the preceding Claims wherein means (20) is provided for sealing engagement with the outer sheath (4) of the cable or pipe (1).

8. A gland according to Claim 7 characterised in that the sealing means (20) comprises an annular seal (20) of resilient material that is compressed inwardly to engage the outer sheath (4) by threaded engagement of a seal nut (14) with the gland body (6), and the seal nut (14) is preferably engageable with a stop (7) on the gland body (6) to control compression of the seal (20).

9. A gland according to Claim 8 characterised in that the seal (20) is positioned between the gland body (6) and seal nut (14), and preferably bears against the tapered entry portion (11) of the opening (10).

10. A method of terminating a cable or pipe (1) comprises axially locating an earthing ring (16) having at least one contact finger on the cable or pipe (1) with said at least one contact finger (18) extending axially and radially outwardly of the cable or pipe (1), presenting a gland body (6) to the cable or pipe (1) with the earthing ring (16) located thereon, inserting the cable or pipe (1) together with the earthing ring (16) into an opening (10) in the gland body (6) so that the at least one contact finger (18) engages a tapered entry portion (11) of the opening (10) and is deflected inwardly causing an inwardly directed projection (19) of the at least one contact finger (18) to pierce an outer insulation sheath (4) of the cable or pipe (1) and contact an inner conductive sleeve (2) of the cable or pipe (1) to establish electrical continuity between the inner sleeve (2) and the gland body (6).

## Patentansprüche

1. Kabelverschraubung (5) zum Anschliessen von einem elektrisch leitenden Mantel (2), der durch eine Außenhülle (4) aus elektrischem Isolationsmaterial bedeckt ist, aufweisenden Kabeln oder Rohren (1), mit einem elektrischen leitenden Verschraubungsgehäuse (6), welches eine axiale Öffnung (10) an einem Ende zur Aufnahme des Kabels oder Rohres (1) und einen elektrisch leitenden Erdungsring (16) zur Aufnahme in der Öffnung (10) zur Herstellung einer Erdverbindung zwischen dem Verschraubungsgehäuse (6) und dem Kabel oder Rohr (1) aufweist, wobei der Erdungsring (16) mindestens einen Kontaktfinger (18) mit einem nach innen gerichteten Vorsprung (19) aufweist, welcher nach innen auslenkbar ist, um die Aussenhülle (4) zu durchstossen und den Mantel (2) zur Herstellung der Erdverbindung zu berühren, dadurch gekennzeichnet, dass bei der Verwendung der Erdungsring (16) mit dem Kabel oder Rohr (1) in der Öffnung (10) in Schiebepassung befindlich ist, und dass der mindestens eine Kontaktfinger (18) durch Eingriff mit einem sich verjüngenden Eingangsabschnitt (11) der Öffnung (10) nach innen ausgelenkt wird, wodurch der Vorsprung (19) die Aussenhülle (4) durchstösst und den leitenden Mantel (2) des Kabels oder Rohres (1) berührt.

2. Kabelverschraubung nach Anspruch 1, dadurch gekennzeichnet, dass der Erdungsring (16) eine Vielzahl von am Umfang in Abständen angeordneten Kontaktfingern (18) aufweist.

3. Kabelverschraubung nach Anspruch 1 oder 2, dadurch gekennzeichnet, dass der Erdungsring (16) eine flache Scheibe (17) aufweist, wobei sich der oder jeder der Kontaktfinger (18) vom Umfang der Scheibe (17) ausgeht.

4. Kabelverschraubung nach Anspruch 3, dadurch gekennzeichnet, dass der oder jeder Kontaktfinger (18) derart angeordnet ist, dass er sich axial und radial von der Scheibe (17) in einem nicht deformierten freien Zustand des Erdungsringes (16) nach aussen erstreckt, ehe er in die Öffnung (10) eingesetzt wird.

5. Kabelverschraubung nach einem der vorstehenden Ansprüche, dadurch gekennzeichnet, dass das Verschraubungsgehäuse (6) eine Innenschulter (15) für die axiale Festlegung des Erdungsringes (16) in der Öffnung (10) aufweist.

6. Kabelverschraubung nach Anspruch 5, dadurch gekennzeichnet, dass die Schulter (15) mit einer Gegenbohrung (10) in dem Verschraubungsgehäuse (6) versehen ist, und dass der Erdungsring (16) an der Schulter (15) anliegt, wobei der oder jeder der Kontaktfinger (18) in dichter Passung mit einem Kabel oder Rohr in der Gegenbohrung (10) in der zusammengefügten Verschraubung (5) steht.

7. Kabelverschraubung nach einem der vorstehenden Ansprüche, dadurch gekennzeichnet, dass eine Einrichtung (20) vorgesehen ist, um einen dichtenden Eingriff mit der Aussenhülle (4) des Kabels oder Rohres (1) herzustellen.

8. Kabelverschraubung nach Anspruch 7, dadurch gekennzeichnet, dass die Dichteinrichtung (20) eine ringförmige Dichtung (20) aus nachgiebigem Material umfasst, welches zum Eingriff mit der Aussenhülle (4) durch den gewindemässigen Eingriff einer Dichtmutter (14) in dem Verschraubungsgehäuse (6) nach innen gedrückt wird, und dass die Dichtmutter (14) bevorzugt in Eingriff mit einem Anschlag (7) an dem Verschraubungsgehäuse (6) gebracht werden kann, um das Zusammendrücken der Dichtung (20) zu steuern.

9. Kabelverschraubung nach Anspruch 8, dadurch gekennzeichnet, dass die Dichtung (20) zwischen dem Verschraubungsgehäuse (6) und der Dichtmutter (14) angeordnet ist und vorzugsweise gegen den sich verjüngenden Eingangsabschnitt (11) der Öffnung (10) anliegt.

10. Verfahren zum Anschliessen eines Kabels oder Rohres (1), bei dem ein Erdungsring (10), welcher mindestens einen Kontaktfinger aufweist, auf dem Kabel oder Rohr (1) angeordnet wird, wobei sich der mindestens eine Kontaktfinger (18) axial und radial nach aussen bezüglich des Kabels oder Rohres (1) erstreckt, Aufschieben eines Verschraubungsgehäuses (6) auf das Kabel oder Rohr (1), auf welchen der Erdungsring (16) angeordnet ist, Einführen des Kabels oder Rohres (1) zusammen mit dem Erdungsring (16) in eine Öffnung (10) in dem Verschraubungsgehäuse (6) derart, dass mindestens ein Kontaktfinger (18) in Eingriff mit einem sich verjüngenden Eingangsabschnitt (11) der Öffnung (10) gelangt und nach innen ausgelenkt wird, wodurch ein nach innen gerichteter Vorsprung (19) des mindestens einen Kontaktfingers (18) eine äussere Isolationsumhüllung (4) des Kabels oder Rohres (1) durchstösst und mit einem inneren leitenden Mantel (2) des Kabels oder Rohres (1) in Berührung gelangt, um einen elektrischen Übergang zwischen dem Innenmantel (2) und dem Verschraubungsgehäuse (6) herzustellen.

## Revendications

1. Presse-garniture pour terminer des câbles ou des tuyaux (1) ayant un manchon (2) électriquement conducteur couvert par une gaine extérieure (4) d'un matériau électriquement isolant qui comprend un corps de presse-garniture électriquement conducteur (6) ayant une ouverture axiale (10) à une extrémité pour recevoir le câble ou tuyau (1), et un anneau de mise à la terre électriquement conducteur (16) destiné à être reçu dans l'ouverture (10) pour fournir une connexion de mise à la terre entre le corps de presse-garniture (6) et le câble ou tuyau (1), l'anneau de mise à la terre (16) ayant au moins un doigt de contact (18) avec une saillie dirigée vers l'intérieur (19) qui peut être déviée vers l'intérieur pour percer la gaine extérieure (4) et entrer en contact avec le manchon (2) pour établir la connexion de mise à la terre, caractérisé en ce que, en utilisation, l'anneau de mise à la terre (16) est un anneau à ajustement par poussée dans l'ouverture (10) par le câble ou tuyau (1), et ledit au moins un doigt de contact (18) est dévié vers l'intérieur par coopération avec une partie d'entrée convergente (11) de l'ouverture (10) pour amener la saillie (19) à percer la gaine extérieure (4) et à entrer en contact avec le manchon conducteur (2) du câble ou tuyau (1).

2. Presse-garniture selon la revendication 1, caractérisé en ce que l'anneau de mise à la terre (16) comprend une pluralité de doigts de contact (18) espacés circonférenciellement.

3. Presse-garniture selon la revendication 1 ou 2, caractérisé en ce que l'anneau de mise à la terre (16) comprend une rondelle plate (17) avec le ou chaque doigt de contact (18) s'étendant depuis la périphérie de la rondelle (17).

4. Presse-garniture selon la revendication 3, caractérisé en ce que le ou chaque doigt de contact (18) est agencé pour s'étendre axialement et radialement vers l'extérieur de la rondelle (17) dans un état libre non déformé de l'anneau de mise à la terre (16) avant d'être inséré dans l'ouverture (10).

5. Presse-garniture selon l'une quelconque des revendications précédentes, caractérisé en ce que le corps de presse-garniture (6) comprend un épaulement intérieur (15) pour positionner axialement l'anneau de mise à la terre (16) dans l'ouverture (10).

6. Presse-garniture selon la revendication 5, caractérisée en ce que l'épaulement (15) est fourni par un élargissement d'alésage (10) dans le corps de presse-garniture (6), et l'anneau de mise à la terre (16) s'appuie contre l'épaulement (15) avec le ou chaque doigt de contact (18) en ajustement serré avec le câble ou tuyau (1) dans l'élargissement d'alésage (10) dans le presse-garniture assemblé (5).

7. Presse-garniture selon l'une quelconque des revendications précédentes, dans lequel des moyens (20) sont prévus pour une coopération d'étanchéité avec la gaine extérieure (4) du câble ou tuyau (1).

8. Presse-garniture selon la revendication 7, caractérisé en ce que les moyens (20) d'étanchéité comprennent une garniture d'étanchéité annulaire (20) d'un matériau élastique qui est comprimé vers l'intérieur pour coopérer avec la gaine extérieure (4) par coopération par vissage d'un écrou d'étanchéité (14) avec le corps de presse-garniture (6), et l'écrou d'étanchéité (14) peut de préférence coopérer avec une butée (7) sur le corps de presse-garniture (6) pour commander la compression de la garniture d'étanchéité (20).

9. Presse-garniture selon la revendication 8, caractérisé en ce que la garniture d'étanchéité (20) est positionnée entre le corps de presse-garniture (6) et l'écrou d'étanchéité (14), et de préférence s'appuie contre la partie d'entrée convergente (11) de l'ouverture (10).

10. Procédé pour terminer un câble ou tuyau (1), comprenant le positionnement axial d'un anneau de mise à la terre (16) ayant au moins un doigt de contact sur le câble ou tuyau (1) avec ledit au moins un doigt de contact (18) s'étendant axialement et radialement vers l'extérieur du câble ou tuyau (1), la présentation d'un corps de presse-garniture (6) au câble ou tuyau (1) avec l'anneau de mise à la terre (16) situé sur celui-ci, l'insertion du câble ou tuyau (1) ensemble avec l'anneau de mise à la terre (16) dans une ouverture (10) dans le corps de presse-garniture (6) de sorte que ledit au moins un doigt de contact (18) coopère avec une partie d'entrée convergente (11) de l'ouverture (10) et est dévié vers l'intérieur pour amener une saillie dirigée vers l'intérieur (19) dudit au moins un doigt de contact (18) à percer une gaine d'isolation extérieure (4) du câble ou tuyau (1) et à entrer en contact avec un manchon conducteur intérieur (2) du câble ou tuyau (1) pour établir une continuité électrique entre le manchon intérieur (2) et le corps de presse-garniture (6).
